# EUROPÄISCHE PATENTSCHRIFT

(11) **EP 3 871 200 B1**
(45) Veröffentlichungstag und Bekanntmachung des Hinweises auf die Patenterteilung: **17.09.2025**
(21) Anmeldenummer: 19794954.8
(22) Anmeldetag: 23.10.2019
(51) Int. Cl.: G07C 9/23, G06F 21/35, G07C 9/26, G07C 9/27, H04L 9/40, G06F 21/32

(54) **ZUGANGSBERECHTIGUNG MITTELS PERSÖNLICHEM ZUGANGSMODUL**
ACCESS AUTHORIZATION BY PERSONAL ACCESS MODULE
AUTORISATION D'ACCÈS PAR UNE MODULE PERSONNELLE D'ACCÈS

(30) Priorität: 23.10.2018 DE 102018126308
(43) Veröffentlichungstag der Anmeldung: 01.09.2021
(73) Patentinhaber: Krones AG, 93073 Neutraubling (DE)
(72) Erfinder: STAUBER, Thomas, 93073 Neutraubling (DE); VOGL, Sebastian, 93073 Neutraubling (DE)
(74) Vertreter: Hannke Bittner & Partner mbB Regensburg
(86) Internationale Anmeldenummer: PCT/EP2019/078854
(87) Internationale Veröffentlichungsnummer: WO 2020/083978

(56) Entgegenhaltungen:
- DE-A1- 102009 017 567
- DE-A1- 102016 220 544
- US-A1- 2017 372 055
- US-A1- 2018 083 959
- US-B2- 9 565 181

## Beschreibung

Die vorliegende Erfindung betrifft ein Verfahren und eine Vorrichtung zur Authentisierung von Anwendern an einem Verpackungsindustriesystem.

Anlagen und Systeme bestehend aus Maschinen, Steuerungen und Leitwarten geraten zunehmend in den Fokus der IT Security Betrachtung. Um sich an einem System (z. B. HMI) anzumelden ist es aktuell notwendig, sich am System mittels Token und Schlüssel (PIN) auszuweisen. Nach Prüfung der PIN werden Berechtigungen freigegeben. Nach einer definierten Zeit deaktiviert das System automisch den eingeloggten User.

Für eine höhere Sicherheit werden möglichst lange und pro System eindeutige Schlüssel mit Sonderzeichen empfohlen, welche in regelmäßigen Abständen zu ändern sind. Lange, wechselnde Schlüssel mit Sonderzeichen, welche regelmäßig geändert werden, bedeuten für den Kunden einen erhöhten Betreuungs- und Verwaltungsaufwand und werden daher in der Praxis meist nicht angewandt. Des Weiteren mangelt es häufig an der notwendigen Technologie bzw. Infrastruktur (z. B. Active Directory Anbindung).

Weitere Nachteile bei Verwendung langer Schlüssel ergeben sich außerdem daraus, dass bei jeder Anmeldung der Schlüssel eingegeben werden muss. Lange und komplexe Schlüssel sind außerdem schwierig zu merken. Lange und komplexe Schlüssel sind zusätzlich schwierig einzugeben, Tippfehler gerade bei der Verwendung von Sonderzeichen sind daher sehr wahrscheinlich. Der Schlüssel muss dem Benutzer auch mitgeteilt werden und kann bei unvorsichtigem Verhalten des Benutzers öffentlich bekannt werden. Aus der US9565181B2 ist ein Verfahren zum Schutz von Sicherheitsnachweisen und aus der DE102009017567A1 eine Verpackungsmaschine mit einer Anmeldungsvorrichtung bekannt. Weiterer Stand der Technik ist der DE102016220544A1, US2018/083959A1 und US2017/372055A1 entnehmbar.

Der Erfindung liegt daher die Aufgabe zugrunde, ein Verfahren und eine Vorrichtung zur Verfügung zu stellen, um Anwender sicher und zuverlässig zu authentisieren ohne dass das Verfahren und die Vorrichtung die genannten Nachteile aufweist.

Ein erfindungsgemäßes Verfahren ist in Anspruch 1 genannt.

Unter einem persönlichen Gegenstand wird ein elektronisch tragbares Gerät des üblichen persönlichen Bedarfs verstanden. Vorstellbar sind dabei insbesondere eine Uhr, smarte Kleidung (z. B. Jacke mit integrierter Elektronik / Stromversorgung, ...), Ringe oder Armbänder, Brillen, Schuhe, etc.

Als mögliche Bedienerschnittstelle kommen z. B. HMI, Kunden-PCs, Leitstände, Zugänge zu Datenbanken, etc. in Betracht.

Die vorliegende Erfindung ist insbesondere dann vorteilhaft, wenn eine Vielzahl von Bedienerschnittstellen von einem Benutzer bedient werden sollen. Dabei ist insbesondere denkbar, dass dem Benutzer für jede Bedienerschnittstelle individuelle Anmeldedaten zugewiesen sind. Insbesondere ist denkbar, dass diese Anmeldedaten alle voneinander verschieden sind. Hierunter ist zu verstehen, dass sich die Anmeldedaten in mindestens einem Merkmal voneinander unterscheiden. Beispielsweise ist dabei möglich, dass ein Benutzer für jede Bedienerschnittstelle ein separates Passwort benötigt.

Der persönliche Gegenstand kann hierbei bevorzugt als Passwort-Safe dienen. Hierunter ist zu verstehen, dass sich in einem Speicher des persönlichen Gegenstandes Anmeldedaten für verschiedene Bedienerschnittstellen befinden können. Hierbei können bevorzugt Anmeldedaten mit starken Schlüsseln gewählt werden, da sich der Benutzer diese nicht mehr auswendig merken muss und diese nicht mehr bei jedem Anmeldeprozess an einer Bedienerschnittstelle erneut eingeben muss. Stattdessen ist ausreichend, dass sich der Benutzer einer Bedienerschnittstelle (beispielsweise einem Touchsystem) nähert. Der persönliche Gegenstand verbindet sich in diesem Fall mit der Bedienerschnittstelle und übernimmt die Anmeldung mit den für das System passenden Anmeldedaten aus dem Passwort-Safe. Eine direkte Anmeldung des Benutzers am System ist daher nicht mehr notwendig.

Die Vorteile der Erfindung liegen somit insbesondere darin, dass die Anmeldung mit einer hohen Schlüsselstärke stattfinden kann und eine direkte, wiederkehrende Anmeldung an den Systemen durch den Benutzer nicht mehr notwendig ist.

Vorteilhaft ist der Speicher des persönlichen Gegenstandes, in dem die Anmeldedaten gespeichert werden, gesondert gesichert.

Bei einem bevorzugten Verfahren muss sich der Benutzer nur noch einmalig (beispielsweise einmal am Tag) an seinem persönlichen Gegenstand anmelden. Die Anmeldung an dem persönlichen Gegenstand kann interaktiv gestaltet sein. Möglich ist hierbei z. B. dass der Benutzer durch einen Anmeldeprozess hindurchgeführt wird. Hierdurch kann auch der Anmeldeprozess am persönlichen Gegenstand selbst vereinfacht werden.

Bei einem besonders bevorzugten Verfahren erfolgt die Anmeldung des Anwenders an dem persönlichen Gegenstand aktiv durch den Benutzer. Vorteilhaft erfolgt die Anmeldung durch ein biometrisches Prüfverfahren und/oder ein persönliches Kennwort.

Als biometrisches Prüfverfahren kommt insbesondere eine Überprüfung eines Fingerabdrucks in Betracht. Es wären jedoch auch eine Iris- oder Retinaerkennung, eine Überprüfung der Gesichtsgeometrie, der Handgeometrie, der Handlinienstruktur, der Handvenenstruktur oder des Nagelbettmusters möglich. Auch eine Überprüfung der Stimme wäre denkbar. Der persönliche Gegenstand weist daher bevorzugt einen zu dem gewählten Prüfverfahren passenden Sensor auf.

Es wäre jedoch auch zusätzlich oder alternativ denkbar, dass an dem persönlichen Gegenstand ein persönliches Kennwort eingegeben werden muss. Bei einem vorteilhaften Verfahren wird dem Benutzer außerdem die Möglichkeit gegeben, sein persönliches Kennwort zu ändern. Bevorzugt ist jedoch nur die Änderung in ein Kennwort mit hoher Schlüsselstärke zugelassen.

Dieses Verfahren ist besonders deshalb vorteilhaft, weil auf diese Weise sichergestellt wird, dass ein Verlust des persönlichen Gegenstandes unkritisch ist, da der Passwort-Safe ohne persönliches Kennwort und/oder Fingerabdruck des Besitzers nicht aktiviert werden kann.

Bei einem bevorzugten Verfahren ist der Zeitraum t, für den der Speicher aktiviert ist, einerseits durch eine vorgegebene Zeit bestimmt. So ist beispielsweise denkbar, dass der Speicher maximal 24 Stunden aktiviert sein kann, so dass sichergestellt ist, dass sich der Benutzer zumindest einmal am Tag an seinem persönlichen Gegenstand anmeldet.

Bei einem besonders bevorzugten Verfahren endet der Zeitraum t, in dem der Speicher aktiviert ist, jedoch andererseits auch dann, wenn der Anwender den persönlichen Gegenstand nicht mehr bei sich trägt. Vorteilhaft ist der Passwort-Safe des persönlichen Gegenstandes nach erfolgreicher Anmeldung daher so lange aktiviert, bis der persönliche Gegenstand nicht mehr vom Benutzer getragen wird. Die Feststellung, dass der persönliche Gegenstand nicht mehr vom Benutzer getragen wird, erfolgt beispielsweise über einen Wärmesensor oder einen Pulsmesser. Es ist jedoch auch möglich, dass über einen Sensor andere biometrische Daten gemessen werden, aus denen geschlossen werden kann, ob der persönliche Gegenstand noch am Körper getragen wird.

Bei der Messung, ob der persönliche Gegenstand noch am Körper getragen wird, ist es zum einen möglich, in regelmäßigen Abständen eine entsprechende Messung durchzuführen. Vorteilhaft findet diese Messung in kurzen Zeitabständen statt, bevorzugt in Zeitabständen von unter 30 min, bevorzugter in Zeitabständen von unter 15 min und besonders bevorzugt in Zeitabständen von unter 5 min.

Bei einem bevorzugten Verfahren wird die Messung, ob der persönliche Gegenstand noch am Körper getragen wird, nicht nur in regelmäßigen Abständen, sondern kontinuierlich durchgeführt. Dies führt zu einer besonders hohen Sicherheit des Verfahrens. Auf diese Weise kann besonders sicher vermieden werden, dass der persönliche Gegenstand abgelegt und von einer nicht autorisierten Person angelegt wird.

Vorteilhaft führt eine kurze Unterbrechung der Messung, bzw. ein negatives Ergebnis der Messung über eine kurze Zeit nicht sofort zu einer Deaktivierung des Speichers, da es sich hierbei auch nur um eine kurze Störung handeln kann. Bevorzugt handelt es sich bei diesem akzeptierten Zeitraum um einen Zeitraum von weniger als 1 min, bevorzugter um einen Zeitraum von weniger als 30 s und besonders bevorzugt von weniger als 10 s. Bevorzugt ist dieser Zeitraum jedoch länger als 1 ms, bevorzugter länger als 10 ms und besonders bevorzugt länger als 100 ms. Auf diese Weise wird vorteilhaft sichergestellt, dass kurzfristige Störungen bei der Messung nicht sofort zu einer Deaktivierung führen, nach denen sich der Anwender wieder an dem persönlichen Gegenstand anmelden muss. Eine missbräuchliche Verwendung des persönlichen Gegenstandes durch eine nicht autorisierte Person wird jedoch dennoch vermieden.

Bei einem vorteilhaften Verfahren ist die Aktivierung des Speichers nur möglich, wenn der persönliche Gegenstand getragen, insbesondere am Körper getragen, wird. Vorteilhaft meldet hierfür ein biometrischer Sensor bereits vor der Anmeldung des Anwenders am persönlichen Gegenstand, ob der persönliche Gegenstand gerade am Körper getragen wird.

Bei einem weiter bevorzugten Verfahren erfolgen die Verbindung des persönlichen Gegenstandes mit der Bedienerschnittstelle und/oder die Authentisierung des Anwenders mit den im Speicher befindlichen Anmeldedaten kontaktlos. Vorteilhaft erfolgen die Verbindung des persönlichen Gegenstandes mit der Bedienerschnittstelle und/oder die Authentisierung des Anwenders mittels Bluetooth.

Vorteilhaft erfolgen diese Verbindung und/oder die Authentisierung des Anwenders automatisch, ohne vom Anwender manuell in die Wege geleitet zu werden. Bevorzugt werden die passenden Anmeldedaten aus dem Passwort-Safe automatisch herausgesucht, wenn dieser aktiviert ist. Vorteilhaft erfolgt eine eindeutige und automatische Zuordnung der Anmeldedaten zu der jeweiligen Bedienerschnittstelle. Dies vereinfacht und beschleunigt den Authentisierungsvorgang an der Bedienerschnittstelle.

Bei einem bevorzugten Verfahren erfolgt die Erkennung, ob sich ein Anwender in einem vordefinierten räumlichen Bereich um die Bedienerschnittstellen befindet, kontaktlos. Vorteilhaft erfolgt diese Erkennung insbesondere mittels Nahfeldkommunikation (NFC). Bei dem vordefinierten räumlichen Bereich um die Bedienerschnittstellen herum handelt es sich bevorzugt um den Bereich, in dem der Anwender nahe genug an der Bedienerschnittstelle ist, um mittels Nahfeldkommunikation detektiert zu werden.

Auf diese Weise kann vorteilhaft eine automatische Verbindung erfolgen, sobald der Anwender so nahe an der Bedienerschnittstelle ist, dass eine Verbindung mittels Nahfeldkommunikation erfolgen kann.

Bei einem vorteilhaften Verfahren kann die Detektion mittels Nahfeldkommunikation mit einer weiteren kontaktlosen Detektion kombiniert werden. Vorteilhaft erfolgt eine Vor-Detektion über eine kontaktlose Detektion, die eine größere Reichweite als die Nahfeldkommunikation aufweist. Bevorzugt kann eine Detektion, insbesondere eine Vor-Detektion, beispielsweise über Bluetooth stattfinden. Vorteilhaft wird bei der Vor-Detektion registriert, ob sich ein Anwender in der Nähe einer Bedienerschnittstelle befindet.

Vorteilhaft kann diese Vor-Detektion in einem zweiten räumlichen Bereich stattfinden, der größer ist als der vordefinierte räumliche Bereich, in dem die Authentisierung des Anwenders möglich ist. Die tatsächliche Freischaltung eines Anwenders erfolgt bevorzugt erst, wenn sich der Anwender in dem vordefinierten räumlichen Bereich befindet.

Bevorzugt werden nur die Anwender vorgehalten, die sich in dem zweiten räumlichen Bereich befinden. Auf diese Weise können auch aufwändigere Anwenderfreigaben realisiert werden, da nur wenige Anwender vorgehalten werden müssen. Es werden vorteilhaft die Anwender vorgehalten, die sich in einem Bluetooth-Empfangsbereich befinden.

Als Bluetooth-Klassen kommen vorteilhaft die Klassen 1 oder 2 in Betracht. Je nach konkreter Anwendung kann Klasse 1 oder 2 vorteilhafter sein. Vorteilhaft wird eine Bluetooth-Reichweite von etwa 1 Meter oder etwa 10 Metern für die Vor-Detektion gewählt. Bevorzugt entspricht der zweite räumliche Bereich daher einem Bereich von etwa 1 Meter oder etwa 10 Metern im Umkreis der Bedienerschnittstelle. Vorteilhaft kann ein Anwender daher vordetektiert werden, wenn er sich der Bedienerschnittstelle auf etwa 1 Meter oder auf etwa 10 Meter genähert hat.

Die Detektion im vordefinierten räumlichen Bereich mittels Nahfeldkommunikation weist dagegen bevorzugt eine Reichweite von etwa 10 cm auf.

Verlässt der Anwender den vordefinierten räumlichen Bereich um die Bedienerschnittstelle, wird bei einem bevorzugten Verfahren die Verbindung mit der Bedienerschnittstelle unterbrochen. Vorteilhaft wird der Anwender in diesem Fall ausgeloggt. Dies ermöglicht einerseits einem anderen Anwender, sich an der jeweiligen Bedienerschnittstelle zu authentisieren. Andererseits verhindert es insbesondere auch besonders effektiv, dass Unbefugte über einen noch eingeloggten Anwender Zugriff auf sensible Daten erhalten können.

Bei einem bevorzugten Verfahren ist jedoch auch denkbar, dass der Anwender auch dann eingeloggt bleibt, wenn er den vordefinierten räumlichen Bereich um die Bedienerschnittstelle verlässt. Dies ist insbesondere dann vorteilhaft, wenn die Detektierung mittels Nahfeldkommunikation funktioniert, da in diesem Fall der vordefinierte räumliche Bereich sehr gering ist.

Bei einem vorteilhaften Verfahren ist es daher möglich, dass der Anwender eingeloggt bleibt, solange er in einem dritten vordefinierten räumlichen Bereich verbleibt. Dieser dritte vordefinierte räumliche Bereich ist dabei bevorzugt größer als der erste vordefinierte räumliche Bereich. Vorteilhaft wird der Anwender daher ausgeloggt, wenn er einen dritten räumlichen Bereich um die Bedienerschnittstelle verlässt. Vorteilhaft kann der dritte räumliche Bereich mit dem zweiten räumlichen Bereich identisch sein. So wäre es beispielsweise möglich, dass der Anwender eingeloggt bleibt, solange er sich noch im Empfangsbereich der Vor-Detektion befindet, insbesondere solange er sich noch im Bluetooth-Empfangsbereich befindet.

Auf diese Weise kann vorteilhaft sichergestellt werden, dass der Anwender an der Bedienerschnittstelle zwar nur dann eingeloggt wird, wenn er sich in deren unmittelbarer Nähe (bevorzugt im Bereich weniger Zentimeter) befindet. So kann z. B. verhindert werden, dass der Anwender aus Versehen eingeloggt wird, weil er in der Nähe der Bedienerschnittstelle vorbeigeht. Dennoch ist die anschließende Bedienung der Bedienerschnittstelle für den Anwender komfortabler, da er nicht sofort wieder ausgeloggt wird, wenn er sich von der Bedienerschnittstelle ein wenig entfernt. Andernfalls würde der Anwender sofort wieder ausgeloggt, wenn er beispielsweise den Arm, an dem der persönliche Gegenstand befestigt ist, zu weit von der Bedienerschnittstelle weghält.

Bei einem vorteilhaften Verfahren wäre außerdem möglich, dass der Anwender für einen bestimmten Zeitraum eingeloggt bleibt, auch wenn er den vordefinierten räumlichen Bereich um die Bedienerschnittstelle herum verlässt. Dies ist insbesondere vorteilhaft, wenn bei einer Anwendung erforderlich ist, dass der Anwender gelegentlich für kurze Zeit den räumlichen Bereich um die Bedienerschnittstelle verlässt, anschließend jedoch an der Bedienerschnittstelle wieder weiterarbeiten soll. Welcher Zeitraum hierfür sinnvoll ist, kann von der jeweiligen Anwendung in der Industrie abhängig sein. Relevante Parameter können hierfür beispielsweise der einzuhaltende Sicherheitsstandard sein, die Dauer, die ein erneutes Einloggen benötigt, ob bei einem zwangsweisen Ausloggen Daten verloren gehen können, ob der Anwender zu der Bedienerschnittstelle Sichtkontakt halten kann, auch wenn er sich aus dem unmittelbaren Nahbereich entfernt, etc. Bevorzugt ist daher der Zeitraum, für den ein Anwender auch bei Verlassen des unmittelbaren Nahbereichs noch eingeloggt bleibt, einstellbar. Vorteilhaft erfolgt diese Einstellung nicht durch den Anwender selbst an dem persönlichen Gegenstand. Stattdessen erfolgt diese Einstellung bevorzugt über eine zentrale Benutzerorder Rechteverwaltung.

Bei einem weiter bevorzugten Verfahren können sich mindestens zwei Anwender mit jeweils einem persönlichen Gegenstand an dem Verpackungsindustriesystem authentisieren. Vorteilhaft können den Anwendern für die Bedienerschnittstellen verschiedene Berechtigungen zugewiesen sein.

Das erfindungsgemäße Verfahren ist insbesondere dann vorteilhaft, wenn mindestens zwei, insbesondere aber auch eine Vielzahl von Anwendern, Berechtigungen für Bedienerschnittstellen erhalten sollen. Gerade bei großen Industrieanlagen ist es häufig erforderlich, dass mehrere Anwender verschiedene Berechtigungen für Bedienerschnittstellen zugewiesen bekommen. So kann es beispielsweise erforderlich sein, dass Anwender 1 die Berechtigung erhält, die Bedienerschnittstellen A, B und C zu bedienen. Anwender 2 soll dagegen nur die Berechtigung für die Bedienerschnittstelle B erhalten, während Anwender 3 die Berechtigungen für die Bedienerschnittstellen C und D erhalten soll.

Bei einem vorteilhaften Verfahren können daher verschiedenen Anwendern für verschiedene Bedienerschnittstellen Berechtigungen zugewiesen werden. Vorteilhaft ist es hierbei möglich, dass für eine Bedienerschnittstelle auch mehrere Anwender eine Zugriffsberechtigung haben.

Bei einem bevorzugten Verfahren können den verschiedenen Anwendern unterschiedliche Level zugewiesen werden. Vorteilhaft können die Anwender durch eine Zuweisung hierarchisch geordnet werden.

Bei einem vorteilhaften Verfahren kann durch die hierarchische Anordnung bei unterschiedlichen Benutzereingaben ausgewählt werden, welche Benutzereingabe vorrangig beachtet wird. Bevorzugt ist es beispielsweise möglich, dass mehrere Anwender an der gleichen Bedienerschnittstelle parametrieren. Durch eine hierarchische Anordnung der Anwender kann beispielsweise ausgewählt werden, dass sich die Parametrierung des Anwenders mit hohem Level gegenüber der eines Anwenders mit niedrigem Level durchsetzt.

Bevorzugt wird hierfür jedem Anwender ein eigener persönlicher Gegenstand zugewiesen. Vorteilhaft sind für jeden Anwender auf seinem persönlichen Gegenstand individuelle Anmeldedaten gespeichert. Bevorzugt unterscheiden sich die Anmeldedaten der Anwender untereinander in mindestens einem Merkmal.

Erfindungsgemäß werden die auf dem Speicher gespeicherten Anmeldedaten über Synchronisierung mit einer zentralen Rechte- oder Benutzerverwaltung verwaltet. In einer zentralen Rechte- oder Benutzerverwaltung werden vorteilhaft alle Anmeldedaten eines Benutzers verwaltet. Bevorzugt werden in der zentralen Rechte- oder Benutzerverwaltung die Anmeldedaten aller Anwender verwaltet. In der zentralen Rechte- oder Benutzerverwaltung kann einem Benutzer vorteilhaft ein persönlicher Gegenstand zugewiesen werden. Bevorzugt erfolgt die Synchronisierung mittels Bluetooth über die Client Applikation der zentralen Benutzerverwaltung.

Erfindungsgemäß wird die Aktivierung des Speichers gesperrt, wenn die Synchronisierung mit der zentralen Rechteverwaltung über einen vordefinierten Zeitraum t2 nicht erfolgt ist. Vorteilhaft kann der Zeitraum t2 in der zentralen Rechte- oder Benutzerverwaltung eingestellt werden. Es ist jedoch auch denkbar, dass ein fest vorgegebener Zeitraum t2 eingehalten werden muss. So ist es beispielsweise möglich, dass die Synchronisation mindestens einmal jährlich erfolgen muss und der Passwort-Safe andernfalls nicht mehr aktiviert werden kann.

Vorteilhaft können an der zentralen Rechte- oder Benutzerverwaltung beliebige Bedienberechtigungen ergänzt und einfach verwaltet werden.

Die vorliegende Erfindung ist weiterhin auf eine Vorrichtung nach Anspruch 7 gerichtet.

Dabei ist die beschriebene Vorrichtung insbesondere dazu eingerichtet und dafür vorgesehen, das obig beschriebene Verfahren durchzuführen, d.h. dass alle für das obig beschriebene Verfahren ausgeführten Merkmale ebenso für die hier beschriebene Vorrichtung offenbart sind und umgekehrt.

Erfindungsgemäß ist die Vorrichtung tragbar. Vorteilhaft kann die Vorrichtung auf einfache Weise in unmittelbarer Körpernähe bzw. am Körper getragen werden. Beispielsweise kann es sich bei der Vorrichtung um eine Uhr handeln, die mit einem Uhrband am Handgelenk befestigt werden kann. Es kann sich jedoch auch beispielsweise um ein Kleidungsstück handeln, das mit den entsprechenden elektronischen Funktionen ausgestattet ist. Wird das Kleidungsstück angezogen, können sich Sensoren im unmittelbaren Kontakt zum Körper des Anwenders befinden.

Bei einer vorteilhaften Ausführungsform weist die Vorrichtung einen Sensor auf, mit dem die Identität des Anwenders eindeutig festgestellt werden kann. Bevorzugt kann es sich um einen biometrischen Sensor handeln. Vorteilhaft kann die Vorrichtung beispielsweise einen Fingerabdruckscanner aufweisen.

Bei einer ebenfalls vorteilhaften Ausführungsform ist die Identität des Anwenders über die Eingabe eines persönlichen Kennworts feststellbar. Hierzu kann der persönliche Gegenstand beispielsweise ein Touchdisplay aufweisen. Es wäre jedoch auch denkbar, dass der persönliche Gegenstand Tasten oder Rädchen zum Drehen aufweist, über die ein Kennwort eingegeben werden kann.

Bei einer vorteilhaften Ausführungsform weist die Vorrichtung außerdem einen Bluetooth-Sender auf. Vorteilhaft weist die Vorrichtung auch einen Bluetooth-Empfänger auf. Bevorzugt sind über den Bluetooth-Sender auf dem Speicher gespeicherte Anmeldedaten übermittelbar.

Bei einer bevorzugten Ausführungsform weist die Vorrichtung außerdem einen NFC-Chip auf. Vorteilhaft kann über den NFC-Chip detektiert werden, wenn sich der Anwender in dem vordefinierten räumlichen Bereich um eine Bedienerschnittstelle befindet.

Weitere Vorteile und Ausführungsformen ergeben sich aus den beigefügten Zeichnungen:
Darin zeigen:
- Fig. 1: eine Darstellung der erfindungsgemäßen Authentisierung;
- Fig. 2: eine schematische Darstellung eines erfindungsgemäßen Verfahrens;
- Fig. 3: eine schematische Darstellung einer erfindungsgemäßen Vorrichtung;
- Fig. 4: ein Ablaufdiagramm des erfindungsgemäßen Verfahrens.

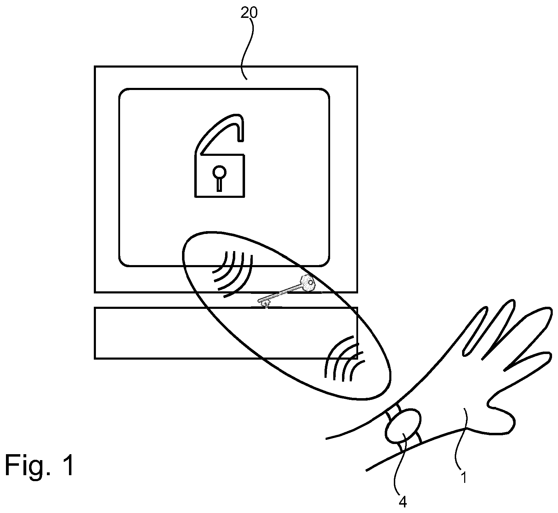

In Fig. 1 ist zu sehen, dass zwischen dem persönlichen Gegenstand 4 und der Bedienerschnittstelle 20 eine Verbindung hergestellt wird, da sich der persönliche Gegenstand 4 nahe an der Bedienerschnittstelle 20 befindet. Bei dem persönlichen Gegenstand 4 handelt es sich bei dieser Darstellung beispielhaft um eine Uhr, die am Handgelenk des Anwenders 1 befestigt ist. Die Bedienerschnittstelle 20 ist passwortgesichert, wie durch das abgebildete Schloss symbolisiert wird. Im Speicher des persönlichen Gegenstandes 4 sind die zu dieser Bedienerschnittstelle 20 gehörenden Anmeldedaten gespeichert. Bei einer erfolgreichen Verbindung zwischen Bedienerschnittstelle 20 und dem persönlichen Gegenstand 4 kann die Bedienerschnittstelle 20 durch die passenden Anmeldedaten (symbolisiert durch den Schlüssel) entsperrt werden, d.h. der Anwender 1 kann sich an der Bedienerschnittstelle 20 authentisieren.

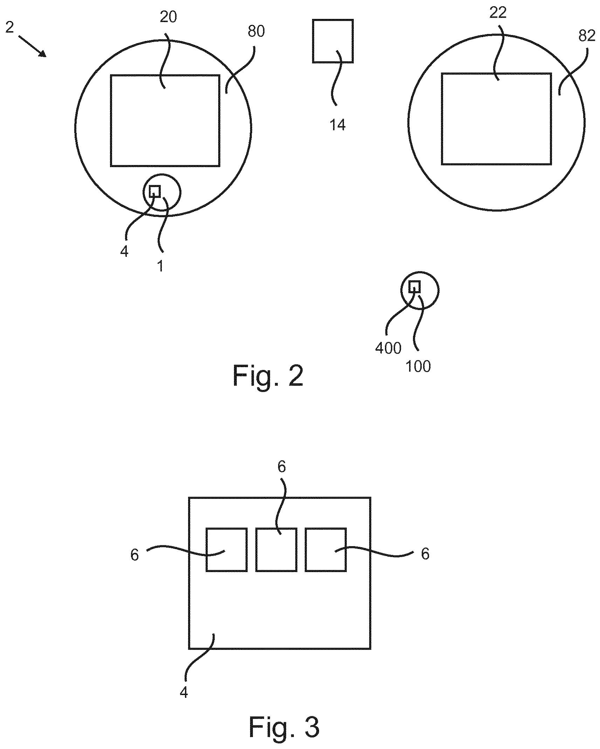

Fig. 2 zeigt ein Verpackungsindustriesystem 2, das die Bedienerschnittstellen 20 und 22 umfasst. Die Bedienerschnittstellen umgibt jeweils ein vordefinierter räumlicher Bereich 80, bzw. 82. Der Anwender 1 befindet sich innerhalb des vordefinierten räumlichen Bereichs 80. Der Anwender 100 befindet sich dagegen außerhalb der vordefinierten räumlichen Bereiche 80 und 82. Der Anwender 1 trägt einen persönlichen Gegenstand 4 bei sich, der Anwender 100 einen persönlichen Gegenstand 400. Da sich der Anwender 1 mit seinem persönlichen Gegenstand 4 in dem vordefinierten räumlichen Bereich 80 befindet, kann zwischen dem persönlichen Gegenstand 4 und der Bedienerschnittstelle 20 eine Verbindung hergestellt werden. Auf diese Weise kann sich der Anwender 1 an der Bedienerschnittstelle 20 authentisieren. Da sich der Anwender 100 außerhalb der vordefinierten räumlichen Bereiche 80 und 82 befindet, kann er sich an keiner der Bedienerschnittstellen 20 oder 22 authentisieren. Zu sehen ist außerdem die zentrale Rechteverwaltung 14, über die alle Anmeldedaten verwaltet werden.

Fig. 3 zeigt eine schematische Darstellung einer erfindungsgemäßen Vorrichtung 4. Die Vorrichtung 4 weist einen Speicher 6 auf, in dem Anmeldedaten für verschiedene Bedienerschnittstellen gespeichert sind. Die Vorrichtung 4 weist außerdem eine Detektionseinrichtung 10 auf, mit der erkennbar ist, wenn sich der Anwender 1 in einem vordefinierten räumlichen Bereich 80 oder 82 um eine Bedienerschnittstelle 20 oder 22 befindet. Zusätzlich weist die Vorrichtung 4 eine Verbindungseinrichtung 12 auf, über die zwischen der Vorrichtung 4 und den Bedienerschnittstellen 20 bzw. 22 eine Verbindung herstellbar ist.

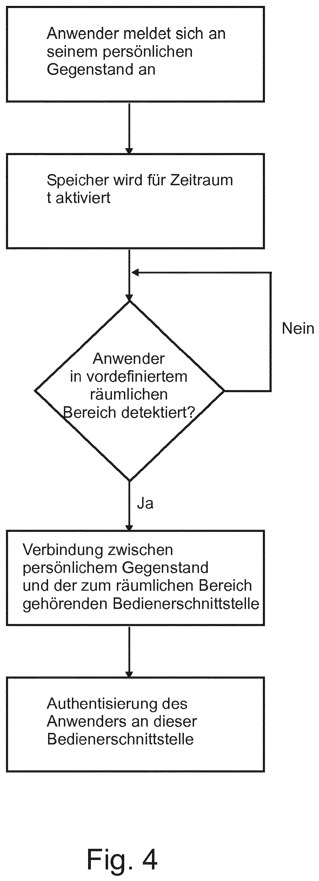

Fig. 4 zeigt ein Ablaufdiagramm eines erfindungsgemäßen Verfahrens. Zu Beginn meldet sich der Anwender an seinem persönlichen Gegenstand an. Hierdurch wird der Speicher für den Zeitraum t aktiviert. Wird der Anwender nach dieser Aktivierung in einem vordefinierten räumlichen Bereich um eine Bedienerschnittstelle detektiert, verbindet sich der persönliche Gegenstand mit dieser Bedienerschnittstelle. Solange der Anwender nicht in einem vordefinierten räumlichen Bereich detektiert wird, kann keine Verbindung stattfinden. In diesem Fall findet keine Änderung der Situation statt, bis der Anwender irgendwann in einem vordefinierten räumlichen Bereich detektiert wird (bzw. der Zeitraum t abgelaufen ist).

Wird der Anwender in einem vordefinierten räumlichen Bereich detektiert und haben sich der persönliche Gegenstand und die Bedienerschnittstelle verbunden, kann sich der Anwender an dieser Bedienerschnittstelle mit den im Speicher befindlichen Anmeldedaten über die Verbindung des persönlichen Gegenstandes zu dieser Bedienerschnittstelle authentisieren.

### Bezugszeichenliste

- 1, 100: Anwender
- 2: Verpackungsindustriesystem
- 4, 400: Vorrichtung / persönlicher Gegenstand
- 6: Speicher
- 10: Detektionseinrichtung
- 12: Verbindungseinrichtung
- 14: zentrale Rechteverwaltung
- 20, 22: Bedienerschnittstelle
- 80, 82: vordefinierter räumlicher Bereich
- t: Zeitraum, für den der Speicher aktiviert ist
- t2: Zeitraum, in dem eine Synchronisierung mit der zentralen Rechteverwaltung erfolgen muss

## Patentansprüche

1. Verfahren zur Authentisierung von Anwendern (1) an einem Verpackungsindustriesystem (2) mit mindestens zwei Bedienerschnittstellen (20, 22), umfassend die folgenden Schritte:
- Anmeldung eines Anwenders (1) an einem persönlichen tragbaren Gegenstand (4), wobei der persönliche Gegenstand (4) einen Speicher (6) mit Anmeldedaten des Anwenders für die mindestens zwei Bedienerschnittstellen (20, 22) aufweist, wobei die Anmeldedaten für die Bedienerschnittstellen (20, 22) voneinander verschieden sind,
- Aktivierung des Speichers (6) für einen Zeitraum (t),
- Detektieren des Anwenders (1), wenn sich dieser in einem vordefinierten räumlichen Bereich (80, 82) um die Bedienerschnittstellen (20, 22) befindet,
- Verbindung des persönlichen Gegenstands (4) mit einer Bedienerschnittstelle (20, 22), wenn der Anwender in dem dazugehörigen räumlichen Bereich (80, 82) erkannt wird,
- Authentisierung des Anwenders (1) an dieser Bedienerschnittstelle (20, 22) mit den im Speicher (6) befindlichen Anmeldedaten über die Verbindung des persönlichen Gegenstandes (4) mit der Bedienerschnittstelle (20, 22), wobei
die auf dem Speicher gespeicherten Anmeldedaten über Synchronisierung mit einer zentralen Rechteverwaltung verwaltet werden und die Aktivierung des Speichers gesperrt wird, wenn die Synchronisierung mit der zentralen Rechteverwaltung über einen vordefinierten Zeitraum nicht erfolgt ist.

2. Verfahren nach Anspruch 1,
**dadurch gekennzeichnet, dass**
die Anmeldung des Anwenders (1) an dem persönlichen Gegenstand (4) durch ein biometrisches Prüfverfahren und/oder ein persönliches Kennwort erfolgt.

3. Verfahren nach zumindest einem der vorangegangenen Ansprüche,
**dadurch gekennzeichnet, dass**
der Zeitraum (t), in dem der Speicher (6) aktiviert ist, endet, wenn der Anwender (1) den persönlichen Gegenstand (4) nicht mehr bei sich trägt.

4. Verfahren nach zumindest einem der vorangegangenen Ansprüche,
**dadurch gekennzeichnet, dass**
die Verbindung des persönlichen Gegenstandes (4) mit der Bedienerschnittstelle (20, 22) und/oder die Authentisierung des Anwenders (1) mit den im Speicher (6) befindlichen Anmeldedaten kontaktlos, insbesondere mittels Bluetooth erfolgen.

5. Verfahren nach zumindest einem der vorangegangenen Ansprüche,
**dadurch gekennzeichnet, dass**
die Erkennung, ob sich ein Anwender (1) in einem vordefinierten räumlichen Bereich (80, 82) um die Bedienerschnittstellen (20, 22) befindet, kontaktlos, insbesondere mittels Nahfeldkommunikation erfolgt.

6. Verfahren nach zumindest einem der vorangegangenen Ansprüche,
**dadurch gekennzeichnet, dass**
sich mindestens zwei Anwender (1, 100) mit jeweils einem persönlichen Gegenstand (4, 400) an dem Verpackungsindustriesystem (2) authentisieren können, wobei den Anwendern (1, 100) für die Bedienerschnittstellen (20, 22) verschiedene Berechtigungen zugewiesen sein können.

7. Vorrichtung (4) zur Authentisierung von Anwendern (1) an einem Verpackungsindustriesystem (2) mit mindestens zwei Bedienerschnittstellen (20, 22), wobei die Vorrichtung (4) einen Speicher (6) mit Anmeldedaten des Anwenders für die mindestens zwei Bedienerschnittstellen (20, 22) aufweist, wobei die Anmeldedaten für die Bedienerschnittstellen (20, 22) voneinander verschieden sind, wobei der Speicher (6) für einen Zeitraum (t) aktivierbar ist, wobei die Vorrichtung (4) eine Detektionseinrichtung (10) aufweist, mit der erkennbar ist, wenn sich der Anwender (1) in einem vordefinierten räumlichen Bereich (80, 82) um die Bedienerschnittstelle (20, 22) befindet, wobei die Vorrichtung (4) eine Verbindungseinrichtung (12) aufweist, über die zwischen der Vorrichtung (4) und den Bedienerschnittstellen (20, 22) eine Verbindung herstellbar ist, wenn der Anwender durch die Detektionseinrichtung (10) in dem zu der Bedienerschnittstelle (20, 22) gehörigen Bereich (80, 82) erkannt wurde, wobei sich der Anwender (1) mittels der für diese Bedienerschnittstelle (20, 22) auf dem Speicher (6) gespeicherten Anmeldedaten an dieser Bedienerschnittstelle (20, 22) authentisieren kann, wobei
der persönliche Gegenstand als Passwort-Safe dient, so dass sich in dem Speicher des persönlichen Gegenstandes Anmeldedaten für verschiedene Bedienerschnittstellen befinden, und der Passwort-Safe des persönlichen Gegenstandes nach erfolgreicher Anmeldung so lange aktiviert ist, bis der persönliche Gegenstand nicht mehr vom Benutzer getragen wird, wobei die Vorrichtung so konfiguriert ist, dass kontinuierlich eine Messung durchgeführt wird, ob der persönliche Gegenstand noch am Körper getragen wird und die Vorrichtung tragbar ist, wobei
die auf dem Speicher gespeicherten Anmeldedaten über Synchronisierung mit einer zentralen Rechteverwaltung verwaltet werden und die Aktivierung des Speichers gesperrt wird, wenn die Synchronisierung mit der zentralen Rechteverwaltung über einen vordefinierten Zeitraum nicht erfolgt ist.

## Claims

1. A method for authenticating users (1) on a packaging industrial system (2) having at least two operator interfaces (20, 22), comprising the following steps:
- login of a user (1) to a personal portable item (4), wherein the personal item (4) comprising a memory (6) with login credentials of the user for the at least two operator interfaces (20, 22), wherein the login credentials for the operator interfaces (20, 22) being different from each other,
- activation of the memory (6) for a period of time (t),
- detecting the user (1) when he is in a predefined spatial area (80, 82) around the operator interfaces (20, 22),
- connecting the personal item (4) to an operator interface (20, 22) when the user is detected in the associated spatial area (80, 82),
- authentication of the user (1) at this operator interface (20, 22) with the login credentials stored in the memory (6) via the connection of the personal item (4) to the operators interface (20, 22), wherein
the login credentials stored on the memory are managed via synchronisation with a central rights management and the activation of the memory is blocked if synchronisation with the central rights management has not taken place for a predefined period of time.

2. The method according to claim 1,
**characterised in that**
the user (1) logs in to the personal item (4) by means of a biometric verification procedure and/or a personal password.

3. The method according to at least one of the preceding claims,
**characterised in that**
the period (t) during which the memory (6) is activated ends when the user (1) is no longer carrying the personal item (4).

4. The method according to at least one of the preceding claims, **characterised in that**
the connection of the personal item (4) to the operator interface (20, 22) and/or the authentication of the user (1) with the login credentials located in the memory (6) is contactless, in particular by means of Bluetooth.

5. The method according to at least one of the preceding claims, **characterised in that**
the detection of whether a user (1) is located in a predefined spatial area (80, 82) around the operator interfaces (20, 22) takes place contactlessly, in particular by means of near field communication.

6. The method according to at least one of the preceding claims, **characterised in that**
at least two users (1, 100) can authenticate themselves on the packaging industrial system (2) with a personal item (4, 400) each, wherein the users (1, 100) can be assigned different authorisations for the operator interfaces (20, 22).

7. Apparatus (4) for authenticating users (1) on a packaging industrial system (2) having at least two operator interfaces (20, 22), wherein the apparatus (4) having a memory (6) with user log-in credentials for the at least two operator interfaces (20, 22), wherein the login credentials for the operator interfaces (20, 22) are different from one another, wherein the memory (6) can be activated for a period of time (t), wherein the apparatus (4) has a detection device (10) with which it can be detected when the user (1) is within a predefined spatial range (80, 82) around the operator interface (20, 22), wherein the apparatus (4) having a connection device (12) via which a connection can be established between the apparatus (4) and the operator interfaces (20, 22) when the user is detected by the detection device (10) in the area (80, 82) belonging to the operator interface (20, 22), 22), wherein the user (1) can authenticate itself at this operator interface (20, 22) by means of the login credentials stored on the memory (6) for this operator interface (20, 22), wherein the personal item serves as a password-safe, so that login credentials for different user interfaces are in the memory of the personal item, and the password-safe of the personal item is activated after successful registration until the personal item is no longer worn by the user, wherein the apparatus is configured to perform continuous measurements, if the personal item is worn on the body and the apparatus is portable, wherein the login credentials stored on the memory are managed via synchronisation with a central rights management and the activation of the memory is blocked if synchronisation with the central rights management has not taken place for a predefined period of time.

## Revendications

1. Procédé d'authentification d'utilisateurs (1) sur un système industriel d'emballage (2) avec au moins deux interfaces opérateur (20, 22), comprenant les étapes suivantes :
- la connexion d'un utilisateur (1) à un objet personnel portable (4), dans lequel l'objet personnel (4) présente une mémoire (6) avec des données de connexion de l'utilisateur pour les au moins deux interfaces opérateur (20, 22), dans lequel les données de connexion pour les interfaces opérateur (20, 22) sont différentes les unes des autres,
- l'activation de la mémoire (6) pendant une période (t),
- la détection de l'utilisateur (1) lorsqu'il se trouve dans une zone spatiale prédéfinie (80, 82) autour des interfaces opérateur (20, 22),
- la connexion de l'objet personnel (4) à une interface opérateur (20, 22) lorsque l'utilisateur est identifié dans la zone spatiale (80, 82) associée,
- l'authentification de l'utilisateur (1) sur ladite interface opérateur (20, 22) avec les données de connexion se trouvant dans la mémoire (6) par l'intermédiaire de la connexion de l'objet personnel (4) à l'interface opérateur (20, 22), dans lequel
les données de connexion stockées sur la mémoire sont gérées par synchronisation avec une gestion centralisée des droits et l'activation de la mémoire est bloquée si la synchronisation avec la gestion centralisée des droits n'a pas eu lieu pendant une période prédéfinie.

2. Procédé selon la revendication 1,
**caractérisé en ce que**
la connexion de l'utilisateur (1) à l'objet personnel (4) s'effectue par un procédé de vérification biométrique et/ou un mot de passe personnel.

3. Procédé selon au moins l'une quelconque des revendications précédentes,
**caractérisé en ce que**
la période (t) pendant laquelle la mémoire (6) est activée se termine lorsque l'utilisateur (1) ne porte plus l'objet personnel (4).

4. Procédé selon au moins l'une quelconque des revendications précédentes,
**caractérisé en ce que**
la connexion de l'objet personnel (4) à l'interface opérateur (20, 22) et/ou l'authentification de l'utilisateur (1) avec les données de connexion se trouvant dans la mémoire (6) s'effectuent sans contact, en particulier par Bluetooth.

5. Procédé selon au moins l'une quelconque des revendications précédentes,
**caractérisé en ce que**
l'identification si un utilisateur (1) se trouve dans une zone spatiale prédéfinie (80, 82) autour des interfaces opérateur (20, 22) s'effectue sans contact, en particulier au moyen d'une communication en champ proche.

6. Procédé selon au moins l'une quelconque des revendications précédentes,
**caractérisé en ce que**
au moins deux utilisateurs (1, 100) peuvent s'authentifier chacun avec un objet personnel (4, 400) sur le système industriel d'emballage (2), dans lequel différentes autorisations peuvent être attribuées aux utilisateurs (1, 100) pour les interfaces opérateur (20, 22).

7. Dispositif (4) d'authentification d'utilisateurs (1) sur un système industriel d'emballage (2) avec au moins deux interfaces opérateur (20, 22), dans lequel le dispositif (4) présente une mémoire (6) avec des données de connexion de l'utilisateur pour les au moins deux interfaces opérateur (20, 22), dans lequel les données de connexion pour les interfaces opérateur (20, 22) sont différentes les unes des autres, dans lequel la mémoire (6) peut être activée pendant une période (t), dans lequel le dispositif (4) présente un système de détection (10), permettant d'identifier si l'utilisateur (1) se trouve dans une zone spatiale prédéfinie (80, 82) autour de l'interface opérateur (20, 22), dans lequel le dispositif (4) présente un dispositif de connexion (12) permettant d'établir une connexion entre le dispositif (4) et les interfaces opérateur (20, 22) lorsque l'utilisateur a été identifié par le système de détection (10) dans la zone (80, 82) associée à l'interface opérateur (20, 22), dans lequel l'utilisateur (1) peut s'authentifier sur ladite interface opérateur (20, 22) au moyen des données de connexion enregistrées sur la mémoire (6) pour ladite interface opérateur (20, 22), dans lequel
l'objet personnel sert de coffre-fort à mot de passe, de sorte que la mémoire de l'objet personnel contient des données de connexion pour différentes interfaces opérateur, et le coffre-fort à mot de passe de l'objet personnel est activé une fois la connexion réalisée avec succès jusqu'à ce que l'objet personnel ne soit plus porté par l'utilisateur, dans lequel le dispositif est configuré de telle sorte qu'une mesure est mise en œuvre en continu si l'objet personnel est toujours porté sur le corps et si le dispositif est portable, dans lequel
les données de connexion stockées sur la mémoire sont gérées par synchronisation avec une gestion centralisée des droits et l'activation de la mémoire est bloquée si la synchronisation avec la gestion centralisée des droits n'a pas eu lieu pendant une période prédéfinie.
